# DEMANDE DE BREVET EUROPEEN

(11) **EP 4 838 317 A1**
(43) Date de publication de la demande: **11.11.2026**
(21) Numéro de dépôt: 26176821.2
(22) Date de dépôt: 06.05.2026
(51) Int. Cl.: G05B 15/02

(54) **SYSTÈME ET PROCÉDÉ DE SUPERVISION ET D'OPTIMISATION DE BÂTIMENTS INTELLIGENTS**

(30) Priorité: 09.05.2025 FR 2504947
(71) Demandeur: Videlio, 92230 Gennevilliers (FR)
(72) Inventeur: JULIA, Sebastien, 30870 CLARENSAC (FR); TERRAL, Frédéric, 34990 JUVIGNAC (FR)
(74) Mandataire: Yes My Patent

(57) **Abrégé**

Le présent document décrit un système (100) de supervision et de contrôle d'équipements de bâtiment comprenant des systèmes audiovisuels et des systèmes de gestion de bâtiment. Le système comprend un serveur (102) avec un serveur web, un serveur de base de données et une instance de traitement d'arrière-plan, un ou plusieurs agents (104) avec une instance de traitement, un courtier de message (106), des moyens de communication (108) entre le serveur, les agents et les équipements du bâtiment, et des moyens d'échange de données (110) entre les systèmes audiovisuels et les systèmes de gestion de bâtiment. Le serveur (102) communique avec les agents (104) via une API non publique pour fournir une liste d'équipements à contacter et des paramètres associés. Les agents (104) communiquent avec les équipements et transmettent des informations au serveur (102) via le courtier de message (106). Le courtier de message (106) facilite la communication entre les agents (104), le serveur (102) et une interface utilisateur (112) via des protocoles de messagerie.

## Description

### DOMAINE DE L'INVENTION

La présente invention concerne un système et un procédé de supervision et d'optimisation de bâtiments intelligents intégrant des équipements audiovisuels et des systèmes de gestion technique.

### CONTEXTE DE L'INVENTION

Les systèmes de supervision et de contrôle des bâtiments ont considérablement évolué ces dernières années, intégrant de plus en plus de fonctionnalités pour améliorer l'efficacité énergétique et le confort des occupants. Ces systèmes permettent généralement de gérer les équipements de chauffage, ventilation et climatisation (CVC), l'éclairage, et d'autres systèmes techniques du bâtiment. Parallèlement, les équipements audiovisuels sont devenus omniprésents dans les espaces de travail modernes, avec des salles de réunion équipées d'écrans, de systèmes de visioconférence et d'autres dispositifs multimédias.

Cependant, l'intégration entre les systèmes de gestion technique du bâtiment et les équipements audiovisuels reste limitée. Les solutions de supervision existantes se concentrent généralement soit sur l'aspect bâtiment, soit sur l'aspect audiovisuel, mais rarement sur les deux simultanément. Cette séparation entraîne des inefficacités dans la gestion globale des espaces, notamment en termes d'optimisation énergétique et d'utilisation des ressources.

Un défi majeur réside dans l'hétérogénéité des protocoles et des normes utilisés par les différents équipements. Les systèmes audiovisuels, en particulier, manquent souvent de normes unifiées, ce qui complique leur intégration avec les systèmes de gestion technique du bâtiment. Cette disparité rend difficile la collecte et l'interprétation cohérente des données provenant de ces différentes sources.

De plus, les méthodes actuelles de détection d'occupation des espaces reposent souvent sur des capteurs dédiés, sans tirer parti des informations potentiellement disponibles à partir des équipements audiovisuels déjà présents. Cette approche limite la granularité et la précision des données d'occupation, ce qui peut conduire à une gestion sous-optimale des ressources énergétiques et des espaces de travail.

Il a été constaté qu'une solution est nécessaire pour surmonter ces limitations. Une telle solution devrait permettre une intégration transparente des systèmes audiovisuels et de gestion technique du bâtiment, offrir une plateforme unifiée pour la collecte et l'interprétation des données provenant de sources diverses, et exploiter de manière innovante les informations des équipements existants pour améliorer la détection d'occupation et l'optimisation des ressources.

Le document US 2011/219066 décrit un système et une méthod pour gérer, router et contrôler des équipements.

Le document ARJUNAN PANDARASAMY ET AL: "SensorAct: A Decentralized and Scriptable Middleware for Smart Energy Buildings" décrit un système d'architecture pour notamment développer différentes applications de gestion de l'énergie.

L'invention vise ainsi à répondre au moins partiellement aux problèmes techniques présentés ci-dessus en proposant un système et un procédé permettant une intégration transparente des équipements audiovisuels et des systèmes de gestion technique du bâtiment. Cette solution offre une plateforme unifiée pour la collecte et l'interprétation des données provenant de sources diverses, tout en exploitant de manière innovante les informations des équipements existants pour améliorer la détection d'occupation et l'optimisation des ressources énergétiques.

### BREF RESUME DE L'INVENTION

Dans un premier aspect, un système de supervision et de contrôle d'équipements de bâtiment est fourni. Le système comprend : un serveur, le serveur comprenant un serveur web, un serveur de base de données, et une instance de traitement d'arrière-plan ; un ou plusieurs agents, chaque agent comprenant une instance de traitement, un courtier de message ; des moyens de communication entre le serveur, les agents, et les équipements du bâtiment ; des moyens d'échange de données entre des systèmes audiovisuels et des systèmes de gestion de bâtiment, dans lequel le serveur est configuré pour communiquer avec les agents via une interface de programmation d'application (API) non publique pour fournir aux agents une liste d'équipements à contacter et des paramètres associés, dans lequel les agents sont configurés pour communiquer avec les équipements du bâtiment et pour transmettre des informations et des statuts au serveur via le courtier de message, et dans lequel le courtier de message est configuré pour faciliter la communication entre les agents, le serveur, et une interface utilisateur via des protocoles de messagerie.

Un serveur web est un logiciel qui répond aux requêtes des clients web, généralement des navigateurs, en leur fournissant des ressources comme des pages HTML. Un serveur de base de données est un système qui stocke, gère et fournit l'accès aux données. Une instance de traitement d'arrière-plan est un processus logiciel qui s'exécute en arrière-plan pour effectuer des tâches sans interaction directe avec l'utilisateur. Un agent, dans ce contexte, est un composant logiciel autonome qui effectue des tâches spécifiques. Un courtier de message est un intermédiaire qui gère la communication entre différentes parties d'un système distribué. Une API (Interface de Programmation d'Application) est un ensemble de définitions et de protocoles permettant à différents logiciels de communiquer entre eux.

Cette configuration offre l'avantage de créer un système centralisé capable de gérer efficacement une grande variété d'équipements de bâtiment, tout en permettant une communication flexible et sécurisée entre les différents composants du système. L'utilisation d'agents distribués permet une gestion locale des équipements, réduisant la latence et améliorant la réactivité du système.

Selon un mode de réalisation, les moyens de communication peuvent comprendre au moins l'un des protocoles suivants : AMQPS, WEBSOCKET, STOMP, API REST, SNMP, Bacnet, ou Modbus.

AMQPS est un protocole de messagerie sécurisé. WEBSOCKET est un protocole de communication bidirectionnelle en temps réel. STOMP est un protocole de messagerie simple orienté texte. API REST est un style d'architecture pour les systèmes distribués. SNMP est un protocole de gestion de réseau. Bacnet est un protocole de communication pour les systèmes d'automatisation des bâtiments. Modbus est un protocole de communication utilisé dans l'industrie.

L'utilisation de ces protocoles variés offre une grande flexibilité dans la communication avec différents types d'équipements et systèmes, permettant une intégration plus large et une meilleure interopérabilité au sein du bâtiment.

Selon un mode de réalisation, les équipements du bâtiment peuvent comprendre : des équipements audiovisuels ; et/ou des capteurs ; et/ou des systèmes de contrôle d'accès ; et/ou des systèmes de chauffage ; et/ou ventilation et climatisation (CVC) ; et/ou des unités d'éclairage.

Cette diversité d'équipements permet une gestion globale et intégrée de tous les aspects du bâtiment, de l'audiovisuel à la sécurité en passant par le confort thermique et l'éclairage, offrant ainsi une solution complète pour l'optimisation des espaces de travail.

Selon un mode de réalisation, le serveur peut être en outre configuré pour communiquer directement avec des plateformes de serveur distant de constructeurs d'équipements via des API dédiées.

Cette fonctionnalité permet une intégration plus poussée avec les systèmes propriétaires des fabricants, offrant un accès à des fonctionnalités avancées et des données spécifiques à chaque équipement, ce qui améliore la précision et l'étendue du contrôle et de la supervision.

Selon un mode de réalisation, le système peut comprendre en outre des moyens pour définir des règles personnalisées pour déterminer l'occupation d'un espace à partir de statuts d'équipements audiovisuels.

Cette capacité à définir des règles personnalisées permet une détection d'occupation plus précise et adaptée à chaque environnement spécifique, améliorant ainsi l'efficacité énergétique et la gestion des espaces.

Selon un mode de réalisation, le système peut comprendre en outre des moyens pour intégrer des informations de réservation provenant de systèmes de calendrier ou de systèmes de réservation d'espaces.

L'intégration des informations de réservation permet une meilleure anticipation de l'utilisation des espaces, facilitant ainsi la planification et l'optimisation des ressources du bâtiment.

Selon un mode de réalisation, le système peut comprendre en outre des moyens pour générer des actions automatisées basées sur l'occupation déterminée d'un espace, les actions comprenant au moins l'une des suivantes : contrôle de l'éclairage, ajustement de la température, ou gestion de l'alimentation électrique des équipements.

Cette automatisation basée sur l'occupation réelle permet une gestion plus efficace de l'énergie et un meilleur confort pour les occupants, tout en réduisant les coûts opérationnels du bâtiment.

Dans un deuxième aspect, un procédé de détermination d'occupation d'un espace à partir de statuts d'équipements audiovisuels est fourni. Le procédé, mis en œuvre par le système selon le premier aspect, comprend : la récupération de statuts d'équipements audiovisuels présents dans l'espace ; la définition de règles pour déterminer l'occupation de l'espace ; la détermination de l'occupation de l'espace basée sur les statuts récupérés et les règles définies ; la mise à jour d'une base de données avec l'information d'occupation déterminée ; et le déclenchement d'actions basées sur l'occupation déterminée.

Les statuts d'équipements audiovisuels peuvent inclure des informations telles que l'état d'alimentation, la présence de signal, ou le niveau d'activité. Les règles de détermination d'occupation sont des conditions logiques définies pour interpréter ces statuts en termes d'occupation. Une base de données est un système organisé pour stocker, gérer et récupérer des informations.

Ce procédé offre l'avantage de déterminer l'occupation d'un espace de manière non intrusive, en utilisant des équipements déjà présents dans l'espace, sans nécessiter l'installation de capteurs de présence dédiés. Cela permet une gestion plus intelligente et économique des espaces de travail.

Selon un mode de réalisation, les règles peuvent comprendre des combinaisons logiques de statuts d'équipements, incluant au moins l'une des suivantes : présence de signal sur un dispositif de connexion, état d'alimentation d'un écran, ou niveau sonore détecté par un système audio.

Ces combinaisons logiques permettent une détection d'occupation plus précise et adaptable à différents scénarios d'utilisation, améliorant ainsi la fiabilité du système.

Selon un mode de réalisation, le procédé peut comprendre en outre l'intégration de données provenant de capteurs dédiés à la détection de présence ou au comptage de personnes.

L'ajout de ces données complémentaires permet d'affiner la détection d'occupation, en particulier dans des situations où les équipements audiovisuels seuls pourraient ne pas fournir une image complète de l'occupation de l'espace.

Selon un mode de réalisation, le procédé peut comprendre en outre l'intégration d'informations de réservation provenant de systèmes de calendrier ou de systèmes de réservation d'espaces.

Cette intégration permet de corréler l'occupation réelle avec les réservations prévues, offrant ainsi des insights précieux sur l'utilisation effective des espaces et facilitant l'optimisation de leur gestion.

Selon un mode de réalisation, les actions déclenchées peuvent comprendre au moins l'une des suivantes : contrôle de l'éclairage, ajustement de la température, gestion de l'alimentation électrique des équipements, ou mise à jour d'un système d'affichage de disponibilité des espaces.

Ces actions automatisées permettent une gestion énergétique optimisée et un meilleur confort pour les occupants, tout en fournissant des informations en temps réel sur la disponibilité des espaces.

Selon un mode de réalisation, le procédé peut comprendre en outre la génération de rapports d'utilisation des espaces basés sur les données d'occupation collectées sur une période de temps.

Ces rapports fournissent des informations précieuses pour l'analyse à long terme de l'utilisation des espaces, permettant une planification plus efficace et une optimisation continue des ressources du bâtiment.

Dans un troisième aspect, un produit de programme d'ordinateur comprenant des instructions pour l'exécution du procédé selon le deuxième aspect est fourni, lorsque ledit programme est exécuté par un ordinateur.

Un produit de programme d'ordinateur est un ensemble d'instructions logicielles stockées sur un support lisible par ordinateur. Un ordinateur, dans ce contexte, peut être tout dispositif de traitement de données capable d'exécuter des instructions programmées.

Ce produit de programme d'ordinateur offre l'avantage de permettre une mise en œuvre facile et standardisée du procédé de détermination d'occupation et de gestion des espaces sur différents systèmes informatiques.

Dans un quatrième aspect, une utilisation du système selon le premier aspect pour la gestion de bâtiment est fournie, comprenant l'optimisation de la consommation énergétique basée sur l'occupation réelle des espaces.

L'optimisation de la consommation énergétique implique l'ajustement dynamique des systèmes du bâtiment (chauffage, climatisation, éclairage, etc.) en fonction de l'occupation réelle détectée.

Cette utilisation permet une réduction significative de la consommation d'énergie dans les bâtiments, contribuant ainsi à la durabilité environnementale et à la réduction des coûts opérationnels, tout en maintenant un niveau de confort optimal pour les occupants.

### BRÈVE DESCRIPTION DES DESSINS

Des modes de réalisation de l'invention seront décrits ci-dessous en référence aux dessins, brièvement décrits ci-dessous :
[Fig. 1] est un schéma fonctionnel d'un système de gestion d'équipements de bâtiment et de systèmes audiovisuels, en accord avec un aspect de la présente divulgation ; et
[Fig. 2] est un organigramme d'un processus de récupération de statuts d'équipements audiovisuels pour déterminer et gérer l'occupation d'espaces, en accord avec un aspect de la présente divulgation.

### DESCRIPTION DÉTAILLÉE DE L'INVENTION

Le système de supervision et de contrôle d'équipements de bâtiment intègre les systèmes audiovisuels et les systèmes de gestion de bâtiment dans une solution unifiée. Ce système comprend un serveur, un ou plusieurs agents, un courtier de message, des moyens de communication, et des moyens d'échange de données. L'architecture flexible du système permet son déploiement sur le réseau local du client ou dans un environnement SaaS, offrant ainsi des options d'installation adaptées aux besoins spécifiques de chaque utilisateur.

L'intégration des systèmes audiovisuels avec les systèmes de gestion de bâtiment traditionnels crée une plateforme de contrôle centralisée, permettant une gestion plus efficace et une optimisation des ressources dans les espaces de travail modernes.

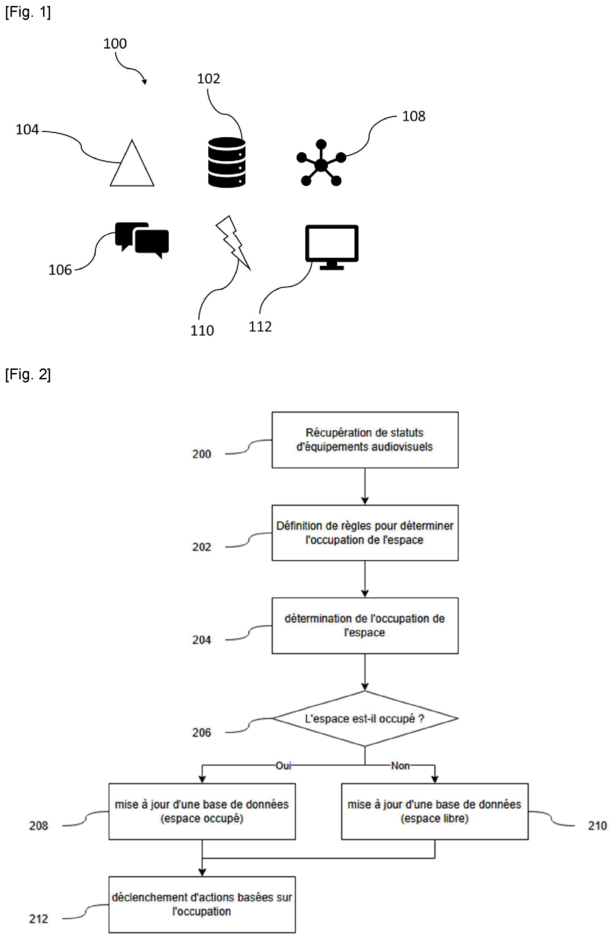

Le système 100 de supervision et de contrôle d'équipements de bâtiment comprend plusieurs composants principaux, illustrés dans la figure 1.

Un serveur 102 constitue le cœur du système 100. Le serveur 102 comprend un serveur web apache, un serveur PHP, une base de données MariaDB et une instance de traitement d'arrière-plan. Cette architecture permet au serveur 102 de gérer les requêtes web, de traiter les données et de les stocker de manière efficace.

Un ou plusieurs agents 104 sont déployés dans le système 100. Chaque agent 104 comprend une instance de traitement, généralement basée sur Node.js. Les agents 104 sont installés sur le réseau local du client et sont configurés pour communiquer avec les équipements du bâtiment. Les agents 104 collectent des informations et des statuts des équipements, puis transmettent ces données au serveur 102.

Un courtier de message 106 facilite la communication entre les différents composants du système 100. Le courtier de message 106 utilise RabbitMQ, une technologie de messagerie robuste. Le courtier de message 106 est configuré pour faciliter la communication entre les agents 104, le serveur 102, et une interface utilisateur via divers protocoles de messagerie. Le courtier de message 106 est installé soit sur le serveur 102, soit sur un serveur indépendant, offrant ainsi une flexibilité dans l'architecture du système.

La communication entre le serveur 102 et les agents 104 s'effectue de deux manières. Premièrement, le serveur 102 est configuré pour communiquer avec les agents 104 via une API non publique. Cette API permet au serveur 102 de fournir aux agents 104 une liste d'équipements à contacter ainsi que les paramètres associés. Deuxièmement, les agents 104 transmettent les informations et les statuts collectés au serveur 102 via le courtier de message 106.

Cette architecture permet une gestion efficace et flexible des équipements de bâtiment, en assurant une communication fluide entre les différents composants du système 100.

Le système 100 comprend des moyens de communication 108 et des moyens d'échange de données 110 qui permettent l'intégration et l'interopérabilité entre les systèmes audiovisuels et les systèmes de gestion de bâtiment.

Les moyens de communication 108 utilisent une variété de protocoles pour faciliter la communication entre les différents composants du système 100. Ces protocoles incluent AMQPS, WEBSOCKET, STOMP, API REST, SNMP, Bacnet et Modbus. L'utilisation de ces protocoles permet une communication flexible et robuste entre le serveur 102, les agents 104, et les équipements du bâtiment.

Les moyens de communication 108 prennent également en charge les protocoles Lora, Dante, IP et GSM, élargissant ainsi la gamme de dispositifs et de systèmes pouvant être intégrés dans le système 100. Cette diversité de protocoles permet au système 100 de communiquer efficacement avec une large gamme d'équipements du bâtiment, comprenant des capteurs, des systèmes de contrôle d'accès, des systèmes de chauffage, ventilation et climatisation (CVC), et des unités d'éclairage.

Les moyens d'échange de données 110 facilitent le transfert d'informations entre les systèmes audiovisuels et les systèmes de gestion de bâtiment. Ces moyens d'échange de données 110 permettent une interprétation et une utilisation cohérentes des données provenant de sources diverses, indépendamment du protocole d'origine.

Le serveur 102 est configuré pour communiquer directement avec des plateformes de serveur distant de constructeurs d'équipements via des API dédiées. Cette fonctionnalité permet au système 100 d'intégrer des données provenant de sources externes, enrichissant ainsi les capacités de supervision et de contrôle du système.

L'utilisation combinée des moyens de communication 108 et des moyens d'échange de données 110 permet au système 100 de créer un environnement unifié où les données des systèmes audiovisuels et des systèmes de gestion de bâtiment sont accessibles, interprétables et utilisables de manière transparente pour les opérations de supervision, de pilotage et d'asservissement.

Le système 100 comprend une interface utilisateur 112 qui permet aux utilisateurs d'interagir avec le système et d'accéder à ses fonctionnalités avancées. L'interface utilisateur 112 fournit des moyens pour définir des règles personnalisées afin de déterminer l'occupation d'un espace à partir des statuts des équipements audiovisuels. Par exemple, l'interface utilisateur 112 permet de configurer des règles basées sur la présence de signal sur un dispositif de connexion, l'état d'alimentation d'un écran, ou le niveau sonore détecté par un système audio.

Le système 100 intègre des informations provenant de capteurs intégrés dans des équipements audiovisuels, tels que des barres de visioconférence. Ces capteurs fournissent des données supplémentaires pour affiner la détection d'occupation. Les règles pour déterminer l'occupation de l'espace incluent des seuils de niveau de volume détectés par un DSP audio, permettant ainsi de détecter la présence de personnes même lorsque les équipements audiovisuels ne sont pas activement utilisés.

L'interface utilisateur 112 offre également des fonctionnalités pour intégrer des informations de réservation provenant de systèmes de calendrier ou de systèmes de réservation d'espaces. Cette intégration permet de corréler les données d'occupation réelle avec les réservations planifiées, offrant ainsi une vue complète de l'utilisation des espaces.

Le système 100 comprend des moyens pour générer des actions automatisées basées sur l'occupation déterminée d'un espace. Ces actions automatisées comprennent le contrôle de l'éclairage, l'ajustement de la température, et la gestion de l'alimentation électrique des équipements. Par exemple, lorsqu'un espace est détecté comme inoccupé, le système 100 peut automatiquement éteindre les lumières, réduire la température de climatisation, et mettre en veille certains équipements audiovisuels pour optimiser la consommation énergétique.

L'interface utilisateur 112 permet aux administrateurs du système de configurer et de personnaliser ces actions automatisées en fonction des besoins spécifiques de chaque espace ou bâtiment. Les utilisateurs peuvent définir des scénarios complexes combinant plusieurs conditions et actions, offrant ainsi une grande flexibilité dans la gestion des espaces et des équipements.

La figure 2 illustre un procédé de détermination d'occupation d'un espace à partir de statuts d'équipements audiovisuels.

Le procédé commence par une récupération de statuts d'équipements audiovisuels 200 présents dans l'espace. Cette étape consiste à collecter les informations de statut des différents équipements audiovisuels installés dans l'espace, tels que les écrans, les systèmes de visioconférence, les dispositifs de connexion ou les systèmes audio.

Ensuite, une définition de règles pour déterminer l'occupation de l'espace 202 est effectuée. Ces règles comprennent des combinaisons logiques de statuts d'équipements. Par exemple, une règle peut stipuler qu'un espace est considéré comme occupé si un signal est présent sur un dispositif de connexion ET si l'écran est allumé. Une autre règle peut considérer l'espace comme occupé si le niveau sonore détecté par le système audio dépasse un certain seuil.

Le procédé se poursuit avec une détermination de l'occupation de l'espace 204, 206 basée sur les statuts récupérés et les règles définies. Cette étape applique les règles aux statuts collectés pour évaluer si l'espace est occupé ou non.

Selon le résultat de cette détermination, le procédé effectue une mise à jour d'une base de données 208, 210. Si l'espace est déterminé comme occupé, une mise à jour d'une base de données (espace occupé) 208 est réalisée. Dans le cas contraire, une mise à jour d'une base de données (espace libre) 210 est effectuée. Cette base de données centralise les informations d'occupation pour tous les espaces supervisés.

Le procédé se termine par un déclenchement d'actions basées sur l'occupation 212. Ces actions peuvent inclure le contrôle de l'éclairage, l'ajustement de la température, la gestion de l'alimentation électrique des équipements, ou la mise à jour d'un système d'affichage de disponibilité des espaces.

Le procédé intègre également des informations de réservation provenant de systèmes de calendrier ou de systèmes de réservation d'espaces. Ces informations sont prises en compte dans la détermination de l'occupation, permettant une gestion plus précise des espaces.

De plus, le procédé permet l'intégration de données provenant de capteurs dédiés à la détection de présence ou au comptage de personnes. Ces données complémentaires affinent la détermination de l'occupation, notamment dans les cas où les équipements audiovisuels ne sont pas utilisés mais l'espace est occupé.

Le système 100 de supervision et de contrôle d'équipements de bâtiment est illustré à la figure. 1. Le système 100 comprend un serveur 102, un ou plusieurs agents 104, un courtier de message 106, des moyens de communication 108, des moyens d'échange de données 110, et une interface utilisateur 112.

Le serveur 102 inclut un serveur web, un serveur de base de données et une instance de traitement d'arrière-plan. Le serveur 102 communique avec les agents 104 via une interface de programmation d'application (API) non publique pour fournir aux agents 104 une liste d'équipements à contacter et des paramètres associés.

Les agents 104 sont installés sur le réseau local du client et communiquent avec les équipements du bâtiment. Les agents 104 transmettent les informations et statuts au serveur 102 via le courtier de message 106.

Le courtier de message 106 facilite la communication entre les agents 104, le serveur 102 et l'interface utilisateur 112 en utilisant divers protocoles de messagerie. Les moyens de communication 108 permettent l'échange de données entre les différents composants du système.

Les moyens d'échange de données 110 assurent l'interopérabilité entre les systèmes audiovisuels et les systèmes de gestion de bâtiment, permettant ainsi une supervision et un contrôle intégrés.

L'interface utilisateur 112 offre aux utilisateurs un accès aux fonctionnalités de supervision et de contrôle du système.

La figure. 2 illustre le processus de détermination de l'occupation d'un espace basé sur les statuts des équipements audiovisuels. Le processus commence par une étape de récupération de statuts d'équipements audiovisuels 200. Ensuite, une étape de définition de règles pour déterminer l'occupation de l'espace 202 établit les critères d'évaluation.

L'étape de détermination de l'occupation de l'espace 204 applique ces règles aux statuts récupérés. Une décision est prise lors de l'étape de détermination de l'occupation de l'espace 206. Si l'espace est occupé, une mise à jour d'une base de données (espace occupé) 208 est effectuée. Dans le cas contraire, une mise à jour d'une base de données (espace libre) 210 est réalisée.

Le processus se termine par une étape de déclenchement d'actions basées sur l'occupation 212, où des actions automatisées sont exécutées en fonction de l'état d'occupation déterminé.

Le système 100 génère des rapports d'utilisation des espaces basés sur les données d'occupation collectées sur une période de temps. Ces rapports fournissent des informations précieuses pour l'optimisation de la gestion des espaces et des ressources du bâtiment.

Un produit de programme d'ordinateur comprend des instructions pour l'exécution du procédé de détermination d'occupation et de gestion des équipements. Ce produit de programme permet l'automatisation des processus de supervision et de contrôle, améliorant ainsi l'efficacité de la gestion du bâtiment.

Le système 100 s'utilise pour la gestion de bâtiment, notamment pour l'optimisation de la consommation énergétique basée sur l'occupation réelle des espaces. En intégrant les données des systèmes audiovisuels et de gestion de bâtiment, le système 100 permet une gestion plus précise et efficace des ressources du bâtiment.

Il convient d'apprécier que les concepts, systèmes, circuits et techniques dont la protection est recherchée ici ne se limitent pas aux applications exemplaires décrites dans le présent document (par exemple, les applications industrielles), mais peuvent être utiles dans pratiquement toute application où il est souhaitable de recevoir un support décisionnel pour chaque étape de manière automatisée. Bien que des modes de réalisation et des applications particuliers de la présente divulgation aient été illustrés et décrits en relation avec la gestion des bâtiments et l'industrie de l'immobilier, il faut comprendre que les modes de réalisation de la divulgation ne sont pas limités à la construction et aux compositions précises divulguées ici et que diverses modifications, changements et variations peuvent être apparents à partir des descriptions précédentes sans s'écarter de l'esprit et de la portée de la divulgation tels que définis dans les revendications annexées.

Bien que des modes de réalisation exemplaires de l'invention aient été décrits, il sera compris par les personnes compétentes dans le domaine que divers changements, omissions et/ou ajouts peuvent être apportés, et que des équivalents peuvent être substitués aux éléments sans s'écarter de l'esprit et de la portée de l'invention. En outre, de nombreuses modifications peuvent être apportées pour adapter une situation ou un matériau particulier aux enseignements de l'invention sans s'écarter de sa portée. Par conséquent, il est prévu que l'invention ne soit pas limitée aux modes de réalisation particuliers divulgués pour la mise en œuvre de cette invention, mais que l'invention inclura tous les modes de réalisation relevant de la portée des revendications annexées. De plus, sauf indication contraire spécifique, toute utilisation des termes premier, deuxième, etc. ne dénote aucun ordre ou importance, mais ces termes premier, deuxième, etc. sont utilisés pour distinguer un élément d'un autre.

## Revendications

1. Système (100) de supervision et de contrôle d'équipements de bâtiment comprenant des systèmes audiovisuels et des systèmes de gestion de bâtiment, comprenant :
• un serveur (102), le serveur comprenant un serveur web, un serveur de base de données, et une instance de traitement d'arrière-plan ;
• un ou plusieurs agents (104), chaque agent comprenant une instance de traitement,
• un courtier de message (106) ;
• des moyens de communication (108) entre le serveur, les agents, et les équipements du bâtiment ;
• des moyens d'échange de données (110) entre les systèmes audiovisuels et les systèmes de gestion de bâtiment,
dans lequel le serveur (102) est configuré pour communiquer avec les agents (104) via une interface de programmation d'application (API) non publique pour fournir aux agents (104) une liste d'équipements à contacter et des paramètres associés,
dans lequel les agents (104) sont configurés pour communiquer avec les équipements du bâtiment et pour transmettre des informations et des statuts au serveur (102) via le courtier de message (106), et
dans lequel le courtier de message (106) est configuré pour faciliter la communication entre les agents (104), le serveur (102), et une interface utilisateur (112) via des protocoles de messagerie.

2. Le système (100) selon la revendication 1, dans lequel les moyens de communication (108) comprennent un protocole de communication tel quel : AMQPS, WEBSOCKET, STOMP, API REST, SNMP, Bacnet, ou Modbus.

3. Le système (100) selon la revendication 1 ou 2, dans lequel les équipements du bâtiment comprennent :
• des équipements audiovisuels ; et/ou
• des capteurs ; et/ou
• des systèmes de contrôle d'accès ; et/ou
• des systèmes de chauffage ; et/ou
• ventilation et climatisation (CVC) ; et/ou
• des unités d'éclairage.

4. Le système (100) selon l'une quelconque des revendications 1 à 3, dans lequel le serveur (102) est en outre configuré pour communiquer directement avec des plateformes de serveur distant de constructeurs d'équipements via des API dédiées.

5. Le système (100) selon l'une quelconque des revendications 1 à 4, comprenant en outre des moyens pour définir des règles personnalisées pour déterminer l'occupation d'un espace à partir de statuts d'équipements audiovisuels.

6. Le système (100) selon l'une quelconque des revendications 1 à 5, comprenant en outre des moyens pour intégrer des informations de réservation provenant de systèmes de calendrier ou de systèmes de réservation d'espaces.

7. Le système (100) selon l'une quelconque des revendications 1 à 6, comprenant en outre des moyens pour générer des actions automatisées basées sur l'occupation déterminée d'un espace, les actions comprenant au moins l'une des suivantes : contrôle de l'éclairage, ajustement de la température, ou gestion de l'alimentation électrique des équipements.

8. Un procédé de détermination d'occupation d'un espace à partir de statuts d'équipements audiovisuels, mis en œuvre par le système (100) selon la revendication 1, comprenant :
• la récupération de statuts d'équipements audiovisuels (200) présents dans l'espace ;
• la définition de règles pour déterminer l'occupation de l'espace (202) ;
• la détermination de l'occupation de l'espace (204, 206) basée sur les statuts récupérés et les règles définies ;
• la mise à jour d'une base de données (208, 210) avec l'information d'occupation déterminée ; et
• le déclenchement d'actions (212) basées sur l'occupation déterminée.

9. Le procédé selon la revendication 8, dans lequel les règles comprennent des combinaisons logiques de statuts d'équipements, incluant au moins l'une des suivantes : présence de signal sur un dispositif de connexion, état d'alimentation d'un écran, ou niveau sonore détecté par un système audio.

10. Le procédé selon la revendication 8 ou 9, comprenant en outre l'intégration de données provenant de capteurs dédiés à la détection de présence ou au comptage de personnes.

11. Le procédé selon l'une quelconque des revendications 8 à 10, comprenant en outre l'intégration d'informations de réservation provenant de systèmes de calendrier ou de systèmes de réservation d'espaces.

12. Le procédé selon l'une quelconque des revendications 8 à 11, dans lequel les actions déclenchées comprennent au moins l'une des suivantes : contrôle de l'éclairage, ajustement de la température, gestion de l'alimentation électrique des équipements, ou mise à jour d'un système d'affichage de disponibilité des espaces.

13. Le procédé selon l'une quelconque des revendications 8 à 12, comprenant en outre la génération de rapports d'utilisation des espaces basés sur les données d'occupation collectées sur une période de temps.

14. Produit de programme d'ordinateur comprenant des instructions pour l'exécution du procédé selon l'une quelconque des revendications 8 à 13 lorsque ledit programme est exécuté par un ordinateur.

15. Utilisation du système (100) selon l'une quelconque des revendications 1 à 7 pour la gestion de bâtiment, comprenant l'optimisation de la consommation énergétique basée sur l'occupation réelle des espaces.
